(19) Europäisches Patentamt
European Patent Office
Office européen des brevets

(11) **EP 3 365 212 B1**

(12) **EUROPÄISCHE PATENTSCHRIFT**

(45) Veröffentlichungstag und Bekanntmachung des Hinweises auf die Patenterteilung:
**21.06.2023   Patentblatt 2023/25**

(21) Anmeldenummer: **16784172.5**

(22) Anmeldetag: **18.10.2016**

(51) Internationale Patentklassifikation (IPC):
**B60W 50/14** (2020.01)     **B60W 30/09** (2012.01)
**B60W 30/095** (2012.01)

(52) Gemeinsame Patentklassifikation (CPC):
**B60W 50/14; B60W 30/09; B60W 30/0953; B60W 30/0956;** B60W 2050/143; B60W 2520/10; B60W 2520/105; B60W 2554/00; B60W 2554/801; B60W 2554/804; B60W 2710/182; B60W 2720/106; B60W 2754/30

(86) Internationale Anmeldenummer:
**PCT/EP2016/074981**

(87) Internationale Veröffentlichungsnummer:
**WO 2017/067929 (27.04.2017 Gazette 2017/17)**

(54) **VERFAHREN UND VORRICHTUNG ZUM STEUERN EINES WARNMODULS**

METHOD AND DEVICE FOR CONTROLLING A WARNING MODULE

PROCÉDÉ ET DISPOSITIF DE COMMANDE D'UN MODULE D'AVERTISSEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2015   DE 102015117976**

(43) Veröffentlichungstag der Anmeldung:
**29.08.2018   Patentblatt 2018/35**

(73) Patentinhaber: **KNORR-BREMSE Systeme für Nutzfahrzeuge GmbH**
**80809 München (DE)**

(72) Erfinder:
• **NOHL, Andreas**
  **71126 Gäufelden (DE)**
• **KLEIN, Markus**
  **75181 Pforzheim (DE)**
• **GÜCKER, Ulrich**
  **71701 Schwieberdingen (DE)**
• **KRABOT, Mátyás**
  **2310 Szigetszentmiklós (HU)**
• **DOCZY, Csaba**
  **1213 Budapest (HU)**
• **JOZSA, Gergely**
  **1171 Budapest (HU)**
• **ROZSA, Tamas**
  **1173 Budapest (HU)**

(56) Entgegenhaltungen:
DE-A1-102009 012 226     DE-A1-102013 218 280
DE-A1-102013 222 880

EP 3 365 212 B1

**Beschreibung**

Die vorliegende Erfindung bezieht sich auf ein Verfahren und eine Vorrichtung zum Steuern eines Warnmoduls und insbesondere auf ein Verfahren zum Unterdrücken von zu frühen Warnungen in dynamischen Situationen von automatischen elektronischen Notbremssystemen (AEBS).

In modernen Fahrzeugen kommen mehr und mehr Assistenzsysteme zum Einsatz, um einerseits die Sicherheit weiter zu erhöhen und anderseits sich einem autonomen Fahren anzunähern. Ein besonders wichtiger Aspekt ist dabei das Erkennen von kritischen Situationen und darauf basierend das Auslösen einer entsprechenden Reaktion. Insbesondere bei Notsituationen, die bei einem Fehlverhalten zu einem Unfall führen, ist es wichtig, den Fahrer entsprechend zu unterstützen. Ein Beispiel hierfür ist das Auslösen einer Notbremsung, die eine unmittelbar bevorstehende Kollision vermeiden oder zumindest abmindern soll. Um einen Fahrer durch das selbständige Auslösen einer Notbremsung jedoch nicht zu überraschen, besitzen solche Systeme Warnmodule, die einen Fahrer auf das bevorstehende Auslösen einer Notbremsung hinweisen.

Aus der Druckschrift EP 1 539 523 B1 ist ein Verfahren und eine Vorrichtung bekannt, bei der ein selbsttätiger Notbremsvorgang nach Ablauf einer Warnzeitdauer ausgelöst wird, während der dem Fahrer die Möglichkeit gegeben wird, durch ein Eingreifen in Form einer Fahrerbremsanforderung den selbsttätigen Notbremsvorgang zu vermeiden. Die Warnzeitdauer ist dabei zeitlich in zwei Stufen unterteilt, wobei in einer ersten Zeitdauer eine optische, akustische oder haptische Fahrerwarnung ausgegeben wird. Falls der Fahrer darauf nicht reagiert, wird während einer zweiten Zeitdauer eine Teilbremsung mit einer Teilbremsverzögerung eingeleitet, die kleiner ist als eine vorgegebene (maximale) Notbremsverzögerung. Erst wenn der Fahrer auch die zweite Warnstufenzeitdauer verstreichen lässt, ohne dass er zumindest ein Bedienelement betätigt, wird der Notbremsvorgang automatisch ausgelöst. Während der Warnzeitdauer hat der Fahrer daher die Möglichkeit, die Gefahrensituation beispielsweise durch Betätigen der Bremse abzuwenden.

Dabei ist die Warnzeitdauer fest vorgegeben oder wird abhängig von der Fahrzeugmasse, dem Reibwert der Radbremseinrichtungen des Fahrzeuges, der Fahrbahnbeschaffenheit oder der Sichtverhältnisse eingestellt. In diesem konventionellen Verfahren wird außerdem zur Bestimmung der Bedingung, die eine Warnung auslöst, die ermittelte Beschleunigung des Fahrzeuges und eine aktuell vorliegende Relativbeschleunigung zwischen dem Fahrzeug und dem vorausfahrenden Fahrzeug ermittelt.

Die genannte Druckschrift verwendet die relative Beschleunigung zwischen den Fahrzeugen, um unter Nutzung der Bewegungsgleichung den Zeitpunkt des Stillstandes des Hindernisses zu ermitteln. Wenn jedoch versucht wird, nicht den in der Druckschrift EP 1 539 523 B1 vorgeschlagen Weg zu gehen, sondern die Warnung stattdessen basierend auf einer momentanen Relativbewegungssituation fest einzustellen, kommt es häufig zu einer zu frühen Warnung oder zu einer überflüssigen Warnung des Fahrers, was die Akzeptanz solcher Systeme deutlich verringert. Insbesondere wenn das vorausfahrende Fahrzeug zum Stehen kommt und die Relativbeschleunigung plötzlich auf einen Wert von Null fällt, kommt es zu Fehlverhalten, z.B. wenn eine Abbremsung (negative Beschleunigung) des vorausfahrenden Fahrzeuges in die Zukunft extrapoliert wird und davon ausgegangen wird, dass die Abbremsung des vorausfahrenden Fahrzeuges sich fortsetzt und sich somit der Abstand zu dem vorausfahrenden Fahrzeug weiter zunehmend verringert. Unter dieser Annahme würde die Warnung entsprechend früher an den Fahrer ausgegeben werden. Falls jedoch die Beschleunigung (d.h. die Abbremsung) des vorausfahrenden Fahrzeuges plötzlich von einem von Null verschiedenen Wert auf einen Wert von Null fällt, verringert sich die Geschwindigkeit des vorausfahrenden Fahrzeuges nicht weiter. Wenn jedoch von einer weiteren Verringerung ausgegangen wird, führt dies in solchen Situationen dazu, dass eine Warnung zu früh ausgegeben wird. Mit anderen Worten in Situationen, wenn das Fahrzeug anhält bzw. kurz vor dem Anhalten ist, bräuchte die Warnung erst zu einem späteren Zeitpunkt ausgegeben werden. Ein weiteres konventionelles Verfahren zur Vermeidung oder Folgenminderung einer Kollision eines Fahrzeugs mit einem Hindernis ist in DE 10 2009 012 226 A1 offenbart.

Daher besteht ein Bedarf nach einem Verfahren, das unkritische Warnungen, insbesondere kurz vor einem Stillstand des Hindernisses, an einen Fahrer vermeidet und einer Plausibilitätsprüfung standhält.

Die vorliegende Erfindung löst das obengenannte technische Problem durch ein Verfahren und eine Vorrichtung zum Steuern eines Warnmoduls basierend auf einer zu erwartenden Zeitdauer bis zu einer Kollision nach Anspruch 1 bzw. Anspruch 8 und ein Computerprogrammprodukt nach Anspruch 9. Die abhängigen Ansprüche beziehen sich auf weitere vorteilhafte Weiterbildungen.

Die vorliegende Erfindung betrifft ein Verfahren zum Steuern eines Warnmoduls basierend auf einer zu erwartenden Zeitdauer bis zu einer Kollision eines Fahrzeugs mit einem Hindernis. Das Warnmodul ist ausgebildet zum Erzeugen einer Warnung über ein bevorstehendes Auslösen eines selbständigen Notbremsvorganges des Fahrzeugs zur Vermeidung der Kollision. Das Verfahren umfasst ein Erlauben einer Ausgabe einer erzeugten Warnung an einen Fahrer des Fahrzeuges, (nur) wenn die zu erwartende Zeitdauer bis zur Kollision kleiner ist als eine Grenzwertfunktion, die von einer Geschwindigkeit des Hindernisses und/oder einer Relativgeschwindigkeit des Fahrzeuges zu dem Hindernis abhängt. Wenn dies nicht der Fall ist, wird eine Warnung des Fahrers unterdrückt. Es versteht sich, dass ein Erlauben einer Warnung nicht bedeutet, dass der Fahrer zwangsläufig gewarnt wird. Vielmehr wird in diesem Fall das Warnmodul nicht daran gehindert, den Fahrer zu warnen. Den Zeitpunkt einer Warnung bestimmt das Warnmodul.

Der Begriff "Warnung" soll im Rahmen der vorliegenden Offenbarung breit ausgelegt werden und umfasst sowohl das Erzeugen eines Warnsignals als auch die Ausgabe einer Warnung. Dementsprechend kann der Schritt des Unterdrückens einer Warnung einerseits bedeuten, dass das entsprechende Warnsignal nicht durch das Warnmodul erzeugt wird oder aber dass lediglich die Ausgabe des Warnsignals an den Fahrer unterdrückt wird, so dass der Fahrer keine Kenntnis von einer etwaigen Warnung bekommt. Dementsprechend ist unter einer Warnung an einen Fahrer eine derartige Signalisierung zu verstehen, die einen Fahrer zu einer potentiellen Reaktion veranlasst.

Die Warnung muss also eindeutig als solche durch den Fahrer wahrnehmbar sein, in welcher Form auch immer.

Grundsätzlich sollten aber Warnungen nur dann ausgegeben werden, wenn sie gerechtfertigt sind. Ansonsten besteht die Gefahr, dass der Fahrer überflüssige oder unkritische Warnungen als störend empfindet und versucht, das System entsprechend abzuschalten oder zu deaktivieren, was dem Zweck solcher Systeme zuwiderläuft. Daher ist es wichtig, den Fahrer nur dann zu warnen, wenn tatsächlich eine Notsituation vorliegt.

Das Warnmodul kann beispielsweise ausgebildet sein, um periodische (z.B. alle 100ms oder alle 40ms zumindest einmal) erfasste Sensordaten (z.B. von einem Radar, Lidar, Kamera) über eine Umgebung des Fahrzeuges auszuwerten. Darauf basierend können sowohl stehende als auch fahrende Objekte auf der Fahrbahn detektiert werden, wobei in der Regel fahrende Objekte bereits in einer größeren Entfernung detektiert werden als bereits stehende. Damit kann das Anhalten eines Fahrzeuges bereits in einer großen Entfernung detektiert werden, während ein stehendes Fahrzeug erst detektiert wird, wenn es relativ nahe ist. Es versteht sich, dass beide Situationen gleichwertig sind, solange die erwartete Zeitdauer bis zu einer potentiellen Kollision ausreichend hoch ist. In Ausführungsbeispielen werden die verschiedenen Situationen hinsichtlich ihres potentiellen Risikos unterschieden.

Das Verfahren umfasst daher gemäß weiteren Ausführungsbeispielen ein Unterdrücken der Warnung des Fahrers, wenn die zu erwartende Zeitdauer bis zur Kollision oberhalb eines Maximalbetrages liegt. Der Maximalbetrag kann beispielsweise eine fest vorgegebene Zeitdauer sein (z.B. 3 Sekunden, 3,2 Sekunden, 5 Sekunden). Er ist im Allgemeinen so groß gewählt, dass der Fahrer in jedem Fall genügend Zeit zur Reaktion hat, und zwar unabhängig von der konkreten Situation. Dementsprechend besteht (noch) kein Grund für eine Warnung des Fahrers.

Bei weiteren Ausführungsbeispielen ist die Grenzwertfunktion durch einen festen Wert gegeben, wenn das Hindernis eine konstante Geschwindigkeit hat. Unter einer konstanten Geschwindigkeit ist insbesondere auch der Fall zu verstehen, dass die Geschwindigkeit gleich Null ist (d.h. das Fahrzeug steht).

Die Grenzwertfunktion ist eine Funktion von einem Parameter, wobei der Parameter ein Verhältnis der Geschwindigkeit des Hindernisses zu der Relativgeschwindigkeit des Fahrzeugs zu dem Hindernis definiert. Dass die Grenzfunktion eine Funktion von dem Parameter ist, bedeutet, dass eine Änderung des Parameters zu einer Änderung der Grenzwertfunktion führt. Die Grenzwertfunktion hängt also in irgendeiner Form von dem Parameter ab. In Ausführungsbeispielen kann die Grenzwertfunktion natürlich von noch weiteren Parametern abhängen, die zusätzlich die Funktionsweise des beschriebenen Verfahrens verbessern.

Bei weiteren Ausführungsbeispielen ist die Grenzwertfunktion als eine abschnittsweise inhomogene lineare Funktion in dem Parameter darstellbar, so dass, wenn die zu erwartende Zeitdauer bis zur Kollision kleiner ist als ein Minimalwert, immer eine Warnung erlaubt ist und, wenn die zu erwartende Zeitdauer bis zur Kollision größer als der Minimalwert ist, die Grenzwertfunktion proportional zu dem Parameter anwächst. Die genannte lineare Funktion stellt lediglich ein Beispiel dar, welches leicht und schnell berechenbar und handhabbar ist, so dass die entsprechenden Berechnungen innerhalb kürzester Zeit ausgeführt werden können, was insbesondere für die beschriebenen Notsituationen wichtig ist. Natürlich ist es jedoch ebenfalls möglich, wenn entsprechende Ressourcen verfügbar sind, dass die lineare Funktion eine allgemeine Kurve darstellen kann, die einen Bereich, wo eine Warnung erlaubt ist, von einem Bereich, wo eine Warnung unterdrückt wird, trennt.

Bei weiteren Ausführungsbeispielen ist der Minimalwert durch einen ersten Wert und einen zweiten Wert gegeben (z.B. als Summe), wobei der erste Wert eine minimale Warnzeit definiert, die ein Fahrer benötigt, um auf eine Warnung reagieren zu können, und der zweite Wert einen Korrekturwert definiert, der so eingestellt wird, dass durch das Warnmodul erzeugte, unkritische Warnungen kurz vor einem Stillstand des Hindernisses unterdrückt werden.

Bei weiteren Ausführungsbeispielen wird der zweite Wert durch eine Optimierung bestimmt, so dass der zweite Wert klein genug ist, um die unkritischen Warnungen zu unterdrücken, und groß genug ist, um durch das Warnmodul erzeugte kritische Warnungen an den Fahrer auszugeben, insbesondere wenn die Geschwindigkeit des Hindernisses oberhalb eines Schwellwertes liegt.

Die hier beschriebene Optimierung kann durch eine Simulation erreicht werden, bei der verschiedene Verkehrssituationen durchgespielt werden. Einerseits beziehen sich solche Verkehrssituationen auf den Fall, wenn das Hindernis sich noch hinreichend schnell bewegt (zum Beispiel schneller als 20 km/h oder schneller als 30 km/h oder schneller als 50 km/h), wo mit einem unmittelbar bevorstehenden Stillstand nicht zu rechnen ist. In diesem Fall sollen alle durch das Warnmodul erzeugten Warnungen an den Fahrer ausgegeben werden. Andererseits werden in der Simulation ebenfalls die Fälle erfasst, bei denen das Fahrzeug kurz vor einem Stillstand ist, d.h. das vorausfahrende Fahrzeug oder das Hindernis sich langsamer bewegt als eine bestimmte Geschwindigkeit (z.B. weniger als 5 km/h oder weniger als 10 km/h), so dass der Stillstand noch vor dem Auslösen der Warnung oder kurz danach zu erwarten ist. In einem solchen Fall sollen unkritischen Warnungen, die in der Simulation nicht zu einer Kollision führen (da z.B. die Reaktion des Fahrers ausreicht) herausgefiltert werden.

Das Herausfiltern geschieht durch eine Verschiebung der Grenzwertfunktion durch eine Änderung des zweiten Wertes. Wenn dieser Wert kleiner wird, werden mehr Warnungen unterdrückt, und wenn dieser Wert größer wird, werden mehr Warnungen erlaubt. In dieser Simulation können ebenfalls Parameter des Fahrzeuges/Hindernisses und Reaktionen des Fahrers berücksichtigt werden, wie z.B. die Maximalverzögerung des Fahrzeuges oder die verschiedenen Möglichkeiten der Reaktion des Fahrers (z.B. wann er und mit welcher Stärke eine Bremsung einleitet). Weitere Parameter in der Simulation sind die Art des Fahrzeuges (z.B. ob es ein Nutzfahrzeug oder ein PKW ist), das Gewicht des Fahrzeuges, Wetterbedingungen oder Straßenverhältnisse.

Wie auch bei den konventionellen Systemen kann bei weiteren Ausführungsbeispielen die erzeugte Warnung zwei aufeinanderfolgende Stufen aufweisen, wobei innerhalb einer ersten Stufe der Fahrer optisch, akustisch oder haptisch gewarnt wird, ohne dass eine selbständige Verzögerung des Fahrzeuges ausgelöst wird. In einer nachfolgenden zweiten Stufe wird wiederum, eine selbständige Verzögerung des Fahrzeuges mit einer vorbestimmten Verzögerung ausgelöst. Die vorbestimmte Verzögerung soll insbesondere kleiner sein als die bei einer Notbremsung ausgelöste Maximalverzögerung. Andererseits soll die vorbestimmte Verzögerung groß genug sein, um durch den Fahrer eindeutig als solche erkannt zu werden und um das Fahrzeug bereits signifikant zu verzögern. Auch dieser Wert kann wieder von dem Fahrzeug selbst als auch dem Gewicht des Fahrzeugs abhängen und an die Umstände angepasst werden.

Bei weiteren Ausführungsbeispielen umfasst das Verfahren weiter ein Auslösen eines Notbremsvorganges, wenn der Fahrer auf die erzeugte Warnung keine vorbestimmte Reaktion zeigt, wobei der selbständige Notbremsvorgang beispielsweise solange ausgeführt wird, bis ein vorbestimmter Sicherheitsabstand zu dem Hindernis erreicht ist. Die vorbestimmte Reaktion kann ein durch den Fahrer ausgelöste Bremsvorgang, Lenkvorgang, Blinkvorgang oder eine andere Reaktion umfassen, die darauf schließen lässt, dass der Fahrer sich der vorliegenden Notsituation bewusst ist.

Dieses Verfahren kann ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. eine der Fahrzeugsteuereinheiten) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein und ebenfalls das beschriebene Steuermodul oder die Warnmodulsteuerung umfassen, die einen entsprechenden Mikroprozessor aufweisen, der einen Software-Code ausführen kann.

Die vorliegende Erfindung bezieht sich ebenfalls auf eine Vorrichtung zum Steuern eines Warnmoduls basierend auf einer zu erwartenden Zeitdauer bis zu einer Kollision. Das Warnmodul ist wiederum ausgebildet zum Erzeugen einer Warnung über ein bevorstehendes Auslösen eines selbständigen Notbremsvorganges eines Fahrzeugs zur Vermeidung einer Kollision mit einem Hindernis. Die Vorrichtung umfasst eine Warnmodulsteuerung, die konfiguriert ist, eine Ausgabe einer erzeugten Warnung an einen Fahrer des Fahrzeuges (nur) zu erlauben, wenn die zu erwartende Zeitdauer bis zur Kollision kleiner ist als eine Grenzwertfunktion. Die Grenzwertfunktion hängt von einer Geschwindigkeit des Hindernisses und einer Relativgeschwindigkeit des Fahrzeuges zu dem Hindernis ab. Wenn die zu erwartende Zeitdauer bis zur Kollision größer ist als eine Grenzwertfunktion (oder gleich) wird eine Ausgabe der Warnung des Fahrers unterdrückt.

Die Grenzwertfunktion ist dabei eine Funktion von einem Parameter, wobei der Parameter ein Verhältnis der Geschwindigkeit des Hindernisses zu der Relativgeschwindigkeit zu dem Hindernis definiert.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.

Fig. 1    zeigt schematisch eine Vorrichtung zum Steuern eines Warnmoduls basierend auf einer zu erwartenden Zeitdauer bis zu einer Kollision gemäß Ausführungsbeispielen der vorliegenden Erfindung.
Fig. 2    zeigt eine beispielhafte Verkehrssituation.
Fig. 3    zeigt beispielhafte Grenzwertfunktionen.
Fig. 4    zeigt ein Beispiel für eine zweistufige Warnung, die das Warnmodul erzeugen kann.

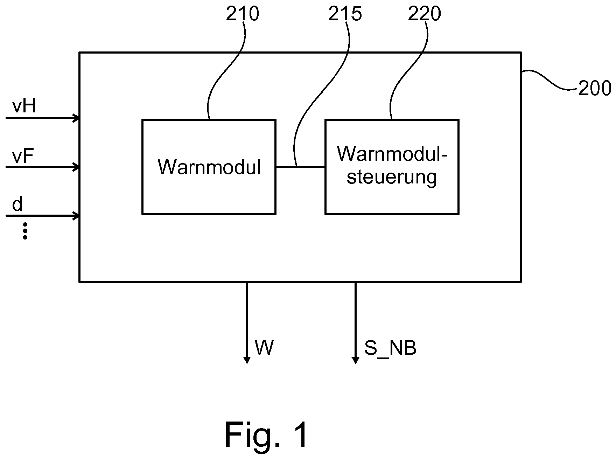

**Fig. 1** zeigt ein Ausführungsbeispiel für eine Vorrichtung 200 zum Steuern eines Warnmoduls 210 basierend auf einer zu erwartenden Zeitdauer bis zu einer Kollision gemäß Ausführungsbeispielen der vorliegenden Erfindung. Die Vorrichtung 200 gibt beispielsweise Warnungen W und ein Steuersignal zum Auslösen von Notbremsungen S_NB heraus. Diese Ausgaben werden in Abhängigkeit von den Eingabewerten erzeugt, die unter anderen die Geschwindigkeit des Hindernisses vH, die Geschwindigkeit des Fahrzeuges vF, einen Abstandes d zwischen dem Hindernis und dem Fahrzeug und weitere Parameter umfassen können. Beispielsweise ist es ebenfalls möglich, dass Wetterbedingungen oder Straßenverhältnisse oder Reibwerte zu der Straße mit berücksichtigt werden, da solche Parameter ebenfalls einen Einfluss auf eine auszuführende Notbremsung haben.

Das Warnmodul 210 ist ausgebildet zum Erzeugen der Warnung W über ein bevorstehendes Auslösen eines selbständigen Notbremsvorganges des Fahrzeugs zur Vermeidung der Kollision mit dem Hindernis. Das Warnmodul 210 bestimmt insbesondere auch den Zeitpunkt der Ausgabe der Warnung W. Die Notbremsung selbst wird durch Ausgabe des Steuersignals S_NB zu einem späteren Zeitpunkt initiiert. Die gezeigten Eingabewerte gehen als Eingabeparameter in die Vorrichtung 200 ein, um basierend darauf zu einem korrekten Zeitpunkt eine Warnung W an den Fahrer auszugeben.

In dem gezeigten Ausführungsbeispiel ist das Warnmodul 210 mit einer Warnmodulsteuerung 220 über eine Kopplung 215 miteinander gekoppelt. Die Kopplung 215 bewirkt, dass das Warnmodul 210 das Erzeugen einer Warnung unterdrückt bzw. eine erzeugte Warnung nicht ausgibt, wenn bestimmte Bedingungen nicht erfüllt sind. Zu diesen Bedingungen zählt insbesondere, dass die zu erwartende Zeitdauer bis zu der Kollision kleiner ist als die Grenzwertfunktion, wobei die Grenzwertfunktion von der Geschwindigkeit des Hindernisses vH und/oder einer Relativgeschwindigkeit des Fahrzeuges vF abhängt. Daher kann optional die Kopplung 215 lediglich verhindern, dass durch das Warnmodul 210 erzeugte Warnungen nicht ausgegeben werden, wenn die genannte Bedingung nicht erfüllt.

Dies bedeutet auch, dass die Warnmodulsteuerung 220 die Funktionsweise des Warnmoduls 210 selbst nicht zu ändern braucht - lediglich die Ausgabe der Warnung kann in Abhängigkeit der Bedingung gesteuert werden. Dementsprechend ist bei weiteren Ausführungsbeispielen ebenfalls das Warnmodul 210 nicht Teil der Vorrichtung 200, sondern kann als externe (konventionelle) Komponente vorliegen, wobei die Warnmodulsteuerung 220 die Ausgabe von Warnungen durch das Warnmodul 210 und/oder die Weitergabe von Warnungen an den Fahrer steuert.

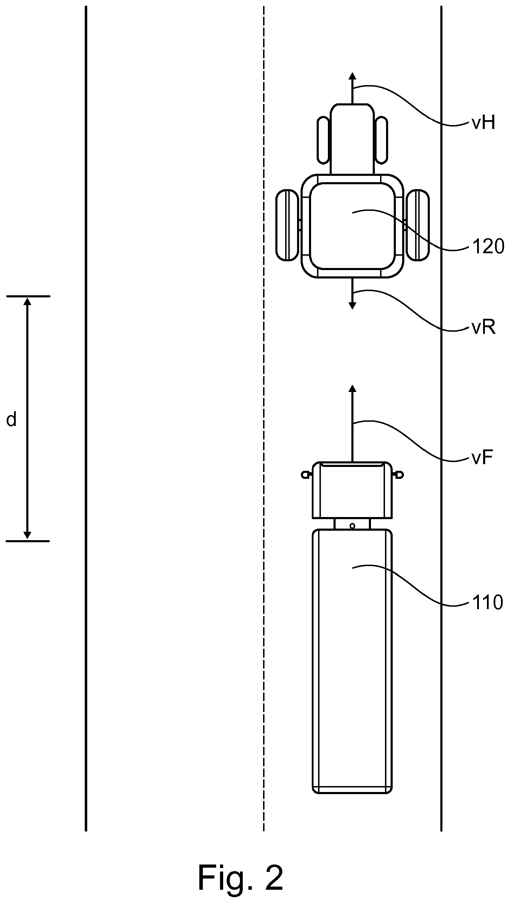

Fig. 2 zeigt eine beispielhafte Verkehrssituation, wo sich auf einer Straße ein Hindernis 120 (z.B. ein anderes Fahrzeug) mit einer Geschwindigkeit vH bewegt. Hinter dem Hindernis 120 bewegt sich das Fahrzeug 110 mit einer Geschwindigkeit vF. Die Geschwindigkeit des Fahrzeuges 110 ist größer als die Geschwindigkeit des Hindernisses (vF > vH) und demzufolge gibt es eine negative Relativgeschwindigkeit vR, die dazu führt, dass sich ein Abstand d zwischen dem Fahrzeug 110 und dem Hindernis 120 mit der Zeit verringert. Wenn das Fahrzeug 110 und das Hindernis ihre Geschwindigkeiten vF, vH beibehalten, wird es zwangsläufig zu einer Kollision kommen. Um dies zu verhindern, muss der Fahrer des Fahrzeuges 110 entweder einen Bremsvorgang einleiten oder einen Spurwechsel ausführen, um das Hindernis 120 zu passieren (unter der Annahme, dass das Hindernis 120 seine Bewegung nicht ändert).

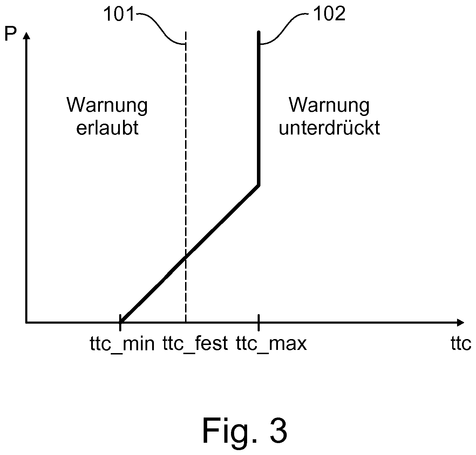

Fig. 3 zeigt Beispiele für eine erste und eine zweite Grenzwertfunktion 101, 102, die von einem Parameter P abhängen und in Abhängigkeit von dem Parameter P eine Region, wo eine Warnung unterdrückt wird, von einer Region, wo Warnungen erlaubt sind, trennt. Diese Trennung erfolgt basierend auf einer erwarteten Zeitdauer bis zu einer Kollision ttc, die von dem Warnmodul 210 berechnet werden kann. Wie es in der Fig. 3 dargestellt ist, sind Warnungen insbesondere dann erlaubt, wenn die zu erwartende Zeitdauer bis zu der Kollision ttc kleiner ist als die Grenzwertfunktionen 101, 102. Die Trennlinie selbst (für ttc = Grenzwertfunktion 101, 102) kann entweder der einen oder der anderen Region zugeordnet werden, d.h. für diese speziellen ttc Werte können Warnungen erlaubt sein oder in andere Ausführungsformen unterdrückt sein. Die erste Grenzwertfunktion 101 beschreibt den Fall, dass das Hindernis eine konstante Geschwindigkeit aufweist, d.h. sich beschleunigungsfrei bewegt (wobei das Hindernis insbesondere auch stehen kann). In diesem Fall, der ein Hintergrundbeispiel darstellt, hängt die Grenzwertfunktion 101 nicht von dem Parameter P ab, sondern ist durch einen festen Wert ttc_fest definiert, d.h. für ttc<ttc_fest sind Warnungen erlaubt ist und für ttc>ttc_fest werden Warnungen unterdrückt.

Die zweite Grenzwertfunktion 102 bezieht sich auf den Fall, dass das Hindernis eine nichtkonstante Geschwindigkeit hat (d.h. ein abbremsendes oder beschleunigendes Hindernis). In diesem Fall ist die Grenzwertfunktion 102 eine Funktion des Parameters P, wobei für Zeitdauern ttc oberhalb eines Maximalwertes ttc_max die Warnung grundsätzlich unterdrückt wird und unterhalb eines Minimalwertes ttc_min grundsätzlich erlaubt ist. Zwischen dem Minimalwert ttc_min und dem Maximalwert ttc_max ist die Grenzwertfunktion 102 als eine Kurve darstellbar (in dem gezeigten Beispiel eine lineare Kurve), die für ansteigende Werte des Parameters P zu ansteigende Werte für die erwartete Zeitdauer ttc bis zur Kollision mit dem Hindernis führt.

Bei weiteren Ausführungsbeispielen kann der feste Wert ttc_fest mit dem Maximalwert ttc_max oder mit dem Minimalwert ttc_min übereinstimmen oder auch nicht (wie in der Fig. 3 gezeigt).

Für diesen Fall, der ein Hintergrundbeispiel darstellt und nicht in den Bereich der Ansprüche fällt, kann die Grenzwertfunktion G durch die folgende Formel ausgedrückt werden:

$$G = ttc\_min + tFactor{*}P = tFixedttc + tWarningTimeMin + tFactor * vObst/vRel$$

wobei der Parameter P durch das Verhältnis der Geschwindigkeit des Hindernisses vH und der Geschwindigkeit des Fahrzeuges vF gegeben ist und der Minimalwert ttc_min zwei Werte umfasst: tFixedttc und tWarningTimeMin. Der Wert tWarningTimeMin stellt einen ersten Wert dar, der zumindest abgewartet werden muss, um einem Fahrer grundsätzlich die Möglichkeit zu geben, entsprechend auf die Verkehrssituation zu reagieren. Dieser Wert liegt beispielsweise in einem Bereich von 0,5 ... 1,5 Sekunden. Er kann jedoch frei gewählt werden. Außerdem ist der Minimalwert ttc_min durch einen zweiten Wert tFixedttc definiert, wobei der zweite Wert einen Korrekturwert darstellt, der durch eine Simulation ermittelt wird. Ebenso ist der Anstiegsfaktor tFactor ein weiterer Parameter, der durch Simulationen an konkrete Situationen angepasst wird.

Im Rahmen der Simulation zur Bestimmung der Werte tFixedttc und tFactor werden insbesondere die folgenden Situationen untersucht und berücksichtigt:

(a) Das Hindernis befindet sich nicht kurz vor dem Stillstand (z.B. die Geschwindigkeit des Hindernisses vH ist größer als ein Schwellwert). In diesem Fall sollen keine Warnungen, die durch das Warnmodul erzeugt werden, unterdrückt werden und alle Simulationsereignisse sollen in dem erlaubten Bereich (links der Kurve) liegen.

(b) Das Hindernis befindet sich kurz vor dem Stillstand, die Situation ist aber unkritisch (z.B. führt das Ergebnis der Simulation nicht zu einer Kollision). In diesem Fall sollten erzeugte Warnungen unterdrückt werden, so dass alle Simulationsereignisse in dem unterdrückten Bereich (rechts der Kurve) liegen sollen. Es handelt sich um überflüssige Warnungen.

Durch die Simulation werden somit Zeitpunkte ermittelt, wann das System eine Warnung ausgeben würde, und diese Zeitpunkte entsprechen Punkte in dem Diagramm der Fig. 3. Die Grenzwertfunktion wird dann so gelegt, dass für kritische Situationen, wo die Warnung gerechtfertigt ist, die Punkte entsprechend in dem erlaubten Bereich liegen, und für unkritische Situationen die Warnung unterdrückt werden soll. In der Fig. 3 geschieht dies konkret durch eine Verschiebung der Grenzwertfunktion 102 parallel zur ttc-Achse, und zwar durch ein Erhöhen oder Verringern des zweiten Wertes tFixedttc, so dass die unkritischen Warnungen in dem Gebiet unterhalb der Grenzwertfunktion 102 liegen und somit unterdrückt werden. Fehlwarnungen für den Fahrer werden damit vermieden.

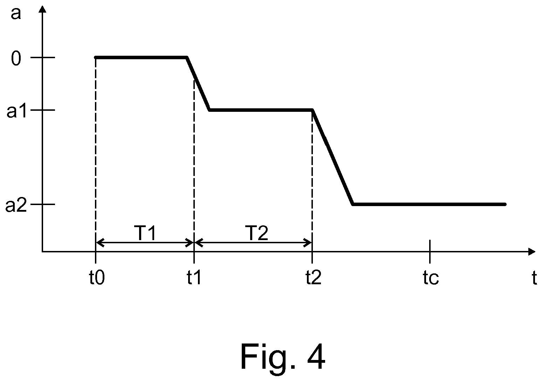

Fig. 4 zeigt ein Beispiel für eine zweistufige Warnung mittels der Beschleunigung a des Fahrzeuges 110. Zunächst ist das Fahrzeug 110 bis zu einem Zeitpunkt t0 beschleunigungsfrei (a=0), d.h. es bewegt sich mit einer konstanten Geschwindigkeit vF. Zum Zeitpunkt t0 hat die Vorrichtung 200 eine Warnung W an den Fahrer ausgegeben.

Die Warnung W umfasst in einer ersten Stufe zwischen der Anfangszeit t0 und einer ersten Zeit t1 lediglich ein optisches, akustisches oder haptisches Warnsignal, welches der Fahrer wahrnehmen kann. Reagiert der Fahrer auf dieses Warnsignal nicht, erfolgt, nach einer Wartezeit T1, zur ersten Zeit t1 ein Abbremsen des Fahrzeuges 110 mit einer Bremsverzögerung a1. Diese Bremsverzögerung dauert bis zu einer zweiten Zeit t2 über eine Zeitdauer T2. Reagiert der Fahrer auf diese zweite Warnung auch nicht, oder nicht entsprechend, wird zur zweiten Zeit t2 eine Notbremsung mit einer zweiten Bremsverzögerung a2 eingeleitet (durch Ausgabe des Signals S_NB). Die Notbremsung kann beispielsweise solange ausgeführt werden, bis das Fahrzeug 110 einen Mindestabstand zu dem Hindernis 120 erreicht hat oder zum Stehen kommt.

Die erste Bremsverzögerung a1 und die zweite Bremsverzögerung a2 sind frei wählbar. Die erste Bremsverzögerung a1 sollte aber ausreichend groß sein, damit sie vom Fahrer eindeutig wahrgenommen wird und er über eine bevorstehende Notbremsung informiert ist. Gleichzeitig sollte sie das Fahrzeug 110 jedoch nicht in eine kritische Situation bringen. Die zweite Bremsverzögerung a2 kann beispielsweise derart ermittelt werden, dass das Fahrzeug 110 mit einer maximal möglichen Verzögerung abbremst, um die Gefahrsituation zu beseitigen.

Die Wartezeit T1 und die Zeitdauer T2 können gleich aber auch verschieden voneinander gewählt werden. Beide Zeitdauern sollten jeweils zumindest so lang sein, dass ein Fahrer in der Lage ist, sie als Warnzeitdauer wahrzunehmen und entsprechend darauf reagieren zu können. Zum Beispiel können die Wartezeit T1 und die Zeitdauer T2 jeweils in einem Bereich zwischen 0,7s ... 1,5s gewählt werden.

Die vorliegende Erfindung löst die eingangs gestellte technische Aufgabe dadurch, dass einerseits für den Fall, wenn das Hindernis 120 keine verzögerte Bewegung ausführt, ein fester Schwellenwert genutzt wird (insbesondere bei einer konstanten Bewegung, eines Stillstandes, eines Anhaltens des Hindernisses 120 bevor die Warnung ausgelöst wird). Außerdem wird dieser feste Schwellenwert basierend auf dem verbleibenden Einfluss der Relativbeschleunigung angepasst, wobei der Einfluss durch das Verhältnis der Geschwindigkeit des Hindernisses 120 zu der Relativgeschwindigkeit abgeschätzt wird. Je höher der Wert dieses Verhältnisses ist, je länger ist die Abbremsbewegung des Hindernisses 120 gültig und die oben beschriebene kritische Situation (kurz bevor das Fahrzeug 110 zum Stillstand kommt) ist noch nicht erreicht.

Ausführungsbeispiele vermeiden somit den Nachteil der alternativen Vorgehensweise und unterdrücken zu frühe Warnungen, da ein variabler Grenzwert für die Zeit bis zur Kollision genutzt wird, um zu frühe Warnungen herauszufiltern. Gemäß Ausführungsbeispielen wird der Grenzwert derart angepasst, dass unkritische, zu frühe Warnungen herausgefiltert werden, während die "gewöhnlichen" Fälle (z.B. mit einer längeren Zeitdauer bis zur Kollision oder bei höheren Hindernisgeschwindigkeiten vH), als gültige Warnungen weiterhin berücksichtigt werden. Somit wird die Zuverlässigkeit des Systems aufrechterhalten. Wenn ein fester Grenzwert genommen würde, würde die Leistungsfähigkeit des Systems beträchtlich reduziert werden.

Gemäß der vorliegenden Erfindung wird der Grenzwert G durch eine lineare Formel bestimmt, die eine minimale Warnzeit berücksichtigt, die ein Fahrer braucht, um überhaupt eine Reaktion zeigen zu können. Das heißt, diese Zeitdauer muss dem Fahrer wenigstens gewährt werden, damit er sinnvollerweise überhaupt eine Reaktion zeigen kann. Diese Minimalwarnzeit wird weiter angepasst durch einen Korrekturwert (tFixedttc), der durch eine Simulation bestimmt werden kann. Zunächst wird dazu der größtmögliche in den Simulationen auftretende Wert für ttc für stationäre Objekte genommen, die diesen Wert bestimmen und nicht durch den ttc-Schwellwert beeinflusst werden sollten. Als nächster Schritt wird der größtmögliche ttc-Wert für bewegende Objekte bestimmt, die zum Stehen gekommen sind, bevor die Warnstufen aktiviert wurden. Der feste Wert sollte nicht das Verhalten von angehaltenen Fahrzeugen beeinflussen, und zwar bis hin zur Maximalgeschwindigkeit des fahrenden Fahrzeuges.

Außerdem wird der ttc-Wert für einen dynamischen Testfall ermittelt. Der feste Wert tFixedttc sollte klein genug sein, um die Warnstufen solange zu unterdrücken, bis das Hindernis 120 in diesen spezifischen Situationen anhält. Falsche Warnungen treten direkt vor dem Stillstand des Hindernisses 120 auf. Außerdem ist der größtmögliche und gültige ttc-Wert für abbremsende Hindernisse 120 derart zu ermitteln, dass, wenn ein Einfluss der Relativbeschleunigung immer noch sehr hoch ist, der Schwellwert die Warnkaskade nicht unterdrücken sollte. Der dynamische Teil des Schwellwertes sollte in diesen Situationen groß genug sein. Der resultierende Schwellwert würde keinen Einfluss auf einen Testfall haben, wenn die Warnung zum frühestmöglichen Zeitpunkt startet. Dies sollte die Leistungsfähigkeit des Verfahrens sicherstellen.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

BEZUGSZEICHENLISTE

| | |
|---|---|
| 101,102 | Grenzwertfunktion(en) |
| 110 | Fahrzeug |
| 120 | Hindernis |
| 200 | Vorrichtung zum Steuern der Warnung |
| 210 | Warnmodul |
| 220 | Warnmodulsteuerung |
| W | Warnung |
| S_NB | Notbremssignal |
| vH | Geschwindigkeit des Hindernisses |
| vF | Geschwindigkeit des Fahrzeuges |
| a | Beschleunigung des Fahrzeuges |
| vR | Relativgeschwindigkeit zwischen Hindernis und Fahrzeug |
| d | Entfernung zwischen Hindernis und Fahrzeug |

**Patentansprüche**

1. Verfahren zum Steuern eines Warnmoduls (210) basierend auf einer zu erwartenden Zeitdauer bis zu einer Kollision (ttc) eines Fahrzeugs (110) mit einem Hindernis (120), wobei das Warnmodul (210) ausgebildet ist zum Erzeugen einer Warnung (W) über ein bevorstehendes Auslösen eines selbständigen Notbremsvorganges des Fahrzeugs (110) zur Vermeidung der Kollision, Erlauben einer Ausgabe einer erzeugten Warnung (W) an einen Fahrer des Fahrzeuges (110), wenn die zu erwartende Zeitdauer (ttc) bis zur Kollision kleiner ist als eine Grenzwertfunktion (101, 102), die von einer Geschwindigkeit (vH) des Hindernisses (120) und einer Relativgeschwindigkeit (vR) des Fahrzeuges (110) zu dem Hindernis (120) abhängt, ansonsten Unterdrücken einer Warnung (W) des Fahrers, **dadurch gekennzeichnet, dass** die Grenzwertfunktion (102) eine Funktion von einem Parameter (P) ist, wobei der Parameter (P) ein Verhältnis der Geschwindigkeit des Hindernisses (vH) zu der Relativgeschwindigkeit (vR) zu dem Hindernis definiert.

2. Verfahren nach Anspruch 1,

**gekennzeichnet durch**
Unterdrücken der Warnung (W) des Fahrers, wenn die zu erwartende Zeitdauer (ttc) bis zur Kollision (ttc) oberhalb eines Maximalbetrages (ttc_max) liegt.

3. Verfahren nach Anspruch 1 oder Anspruch 2,
**dadurch gekennzeichnet, dass**
die Grenzwertfunktion (101) einen festen Wert (ttc_fest) aufweist, wenn das Hindernis (120) eine konstante Geschwindigkeit aufweist.

4. Verfahren nach einem der vorhergehenden Ansprüche,
**dadurch gekennzeichnet, dass**
die Grenzwertfunktion (102) als eine abschnittsweise inhomogene lineare Funktion in dem Parameter (P) darstellbar ist, so dass, wenn die zu erwartende Zeitdauer bis zur Kollision (ttc) kleiner ist als ein Minimalwert (ttc_min), immer eine Warnung erlaubt ist und, wenn die zu erwartende Zeitdauer bis zur Kollision (ttc) größer als der Minimalwert (ttc_min) ist, die Grenzwertfunktion (102) proportional zu dem Parameter (P) anwächst.

5. Verfahren nach Anspruch 4,
**dadurch gekennzeichnet, dass**
der Minimalwert (ttc_min) durch einen ersten Wert (tWarningMin) und einen zweiten Wert (tFixedttc) gegeben ist, wobei der erste Wert (tWarningMin) eine minimale Warnzeit definiert, die ein Fahrer benötigt, um auf eine Warnung zu reagieren, und der zweite Wert (tFixedttc) einen Korrekturwert definiert.

6. Verfahren nach einem der vorhergehenden Ansprüche,
**dadurch gekennzeichnet, dass**
die erzeugte Warnung (W) zwei aufeinanderfolgende Stufen umfasst, wobei innerhalb einer ersten Stufe der Fahrer optisch, akustisch oder haptisch gewarnt wird, ohne dass eine selbständige Verzögerung des Fahrzeuges (210) ausgelöst wird, und in einer nachfolgenden zweiten Stufe, eine selbständige Verzögerung des Fahrzeuges (210) mit einer vorbestimmten Verzögerung (a1) ausgelöst wird.

7. Verfahren nach Anspruch 6,
**gekennzeichnet durch**
Auslösen eines Notbremsvorganges, wenn der Fahrer auf die erzeugte Warnung keine vorbestimmte Reaktion zeigt, wobei der selbständige Notbremsvorgang solange ausgeführt wird, bis ein vorbestimmter Sicherheitsabstand zu dem Hindernis (120) erreicht ist.

8. Vorrichtung zum Steuern eines Warnmoduls (210) basierend auf einer zu erwartenden Zeitdauer bis zu einer Kollision (ttc), wobei das Warnmodul (210) ausgebildet ist zum Erzeugen einer Warnung (W) über ein bevorstehendes Auslösen eines selbständigen Notbremsvorganges eines Fahrzeugs (110) zur Vermeidung einer Kollision mit einem Hindernis (120),

eine Warnmodulsteuerung (220), die konfiguriert ist, eine Ausgabe einer erzeugten Warnung an einen Fahrer des Fahrzeuges (110) zu erlauben, wenn die zu erwartende Zeitdauer bis zur Kollision (ttc) kleiner ist als eine Grenzwertfunktion (101, 102), die von einer Geschwindigkeit des Hindernisses (vH) und einer Relativgeschwindigkeit des Fahrzeuges zu dem Hindernis (vR) abhängt, und ansonsten eine Ausgabe der Warnung (W) des Fahrers zu unterdrücken,
**dadurch gekennzeichnet, dass**
wobei die Grenzwertfunktion (102) eine Funktion von einem Parameter (P) ist, wobei der Parameter (P) ein Verhältnis der Geschwindigkeit des Hindernisses (vH) zu der Relativgeschwindigkeit (vR) zu dem Hindernis definiert.

9. Computerprogrammprodukt mit darauf gespeicherten Programmanweisungen, die ausgebildet sind, um ein Verfahren nach einem der Ansprüche 1 bis 7 auszuführen, wenn er durch eine Verarbeitungseinheit ausgeführt wird.

**Claims**

1. Method for controlling a warning module (210) on the basis of an expected time period up to a collision (ttc) of a vehicle (110) with an obstacle (120), wherein the warning module (210) is designed to generate a warning (W) of imminent triggering of an automatic emergency braking process of the vehicle (110) in order to avoid the collision,

permitting outputting of a generated warning (W) to a driver of the vehicle (110) if the expected time period (ttc) up to the collision is shorter than a limiting value function (101, 102) which depends on a speed (vH) of the obstacle (120) and a relative speed (vR) of the vehicle (110) with respect to the obstacle (120), and otherwise suppressing a warning (W) to the driver,
**characterized in that**
the limiting value function (102) is a function of a parameter (P), wherein the parameter (P) defines a ratio of the speed of the obstacle (vH) to the relative speed (vR) with respect to the obstacle.

2. Method according to Claim 1,
**characterized by**
suppressing the warning (W) to the driver if the expected time period (ttc) up to the collision (ttc) is above a maximum absolute value (ttc_max).

3. Method according to Claim 1 or Claim 2,
**characterized in that**
the limiting value function (101) has a fixed value (ttc_fest) if the obstacle (120) has a constant speed.

4. Method according to one of the preceding claims,
**characterized in that**
the limiting value function (102) can be represented as a partially non-homogeneous linear function in the parameter (P), so that if the expected time period up to the collision (ttc) is shorter than a minimum value (ttc_min) a warning is always permitted, and if the expected time period up to the collision (ttc) is longer than the minimum value (ttc_min) the limiting value function (102) increases in proportion with the parameter (P).

5. Method according to Claim 4,
**characterized in that**
the minimum value (ttc_min) is given by a first value (tWarningMin) and a second value (tFixedttc), wherein the first value (tWarningMin) defines a minimum warning time which a driver requires to react to a warning, and the second value (tFixedttc) defines a correction value.

6. Method according to one of the preceding claims,
**characterized in that**
the generated warning (W) comprises two successive stages, wherein within a first stage the driver is warned visually, acoustically or haptically, without automatic deceleration of the vehicle (210) being triggered, and in a subsequent second stage automatic deceleration of the vehicle (210) is triggered with a predetermined deceleration (a1).

7. Method according to Claim 6,
**characterized by**
triggering of an emergency braking process if the driver does not exhibit any predetermined reaction to the generated warning, wherein the automatic emergency braking process is executed until a predetermined safety distance from the obstacle (120) is reached.

8. Device for controlling a warning module (210) on the basis of an expected time period up to a collision (ttc), wherein the warning module (210) is designed to generate a warning (W) of imminent triggering of an automatic emergency braking process of a vehicle (110) in order to avoid a collision with an obstacle (120),

a warning module controller (220) which is configured to permit outputting of a generated warning to a driver of the vehicle (110) if the expected time period up to the collision (ttc) is shorter than a limiting value function (101, 102) which depends on a speed of the obstacle (vH) and a relative speed of the vehicle with respect to the obstacle (vR), and otherwise to suppress outputting of the warning (W) to the driver,
**characterized in that**
wherein the limiting value function (102) is a function of a parameter (P), wherein the parameter (P) defines a ratio of the speed of the obstacle (vH) to the relative speed (vR) with respect to the obstacle.

9. Computer program product with program instructions which are stored thereon and are designed to execute a method according to one of Claims 1 to 7, when said computer program product is executed by a processing unit.

**Revendications**

1. Procédé de commande d'un module (210) d'avertissement sur la base d'une durée à escompter jusqu'à une collision (ttc) d'un véhicule (110) avec un obstacle (120), dans lequel le module (210) d'avertissement est constitué pour la production d'un avertissement (W) sur un déclenchement imminent d'une opération indépendante de freinage d'urgence du véhicule (110) pour éviter la collision pour l'autorisation d'un envoi d'une émission (W) produite à un conducteur du véhicule (110), si la durée (ttc) à escompter jusqu'à la collision est plus petite qu'une fonction (101, 102) de valeur limite, qui dépend d'une vitesse (vH) de l'obstacle (120) et d'une vitesse (vR) relative du véhicule (110) par rapport à l'obstacle (120), sinon pour la suppression d'un avertissement (W) du conducteur,
**caractérisé en ce que**
la fonction (102) de valeur limite est une fonction d'un paramètre (P), dans lequel le paramètre (P) définit un rapport de la vitesse de l'obstacle (vH) à la vitesse (vR) relative par rapport à l'obstacle.

2. Procédé suivant la revendication 1,
**caractérisé par**
la suppression de l'avertissement (W) du conducteur, si la durée (ttc) à escompter jusqu'à la collision (ttc) est supérieure à un montant (ttc_max) maximum.

3. Procédé suivant la revendication 1 ou la revendication 2,
**caractérisé en ce que**
la fonction (101) de valeur limite à une valeur (ttc_fest) fixe, si l'obstacle (120) a une vitesse constante.

4. Procédé suivant l'une des revendications précédentes,
**caractérisé en ce que**
la fonction (102) de valeur limite peut être représentée sous la forme d'une fonction linéaire non homogène par section du paramètre (P), si la durée à escompter jusqu'à la collision (ttc) est plus petite qu'une valeur (ttc_min) minimum, un avertissement est toujours autorisé et, si la durée à escompter jusqu'à la collision (ttc) est plus grande que la valeur (ttc_min) minimum, la fonction (102) de valeur limite augmente proportionnellement au paramètre (P) .

5. Procédé suivant la revendication 4,
**caractérisé en ce que**
la valeur (ttc_min) minimum est donnée par une première valeur (tWarningMin) et par une deuxième valeur (tFixedttc), dans lequel la première valeur (tWarningMin) définit un temps d'avertissement minimum, dont un conducteur a besoin pour réagir à un avertissement, et la deuxième valeur (tFixedttc) définit une valeur de correction.

6. Procédé suivant l'une des revendications précédentes,
**caractérisé en ce que**
l'avertissement (W) produit comprend deux stades successifs, dans lequel, dans un premier stade, on avertit le conducteur optiquement, acoustiquement ou haptiquement, sans qu'une décélération indépendante du véhicule (210) soit déclenchée et, dans un deuxième stade suivant, une décélération indépendante du véhicule (210) est déclenchée avec une décélération (a1) déterminée à l'avance.

7. Procédé suivant la revendication 6,
**caractérisé par**
le déclenchement d'une opération de freinage d'urgence, si le conducteur ne montre pas de réaction déterminée à l'avance à l'avertissement produit, dans lequel on exécute l'opération indépendante de freinage d'urgence, jusqu'à ce qu'une distance déterminée à l'avance de sécurité, par rapport à l'obstacle (120), soit atteinte.

8. Dispositif de commande d'un module (210) d'avertissement sur la base d'une durée à escompter jusqu'à une collision (ttc), dans lequel le module (210) d'avertissement est constitué pour la production d'un avertissement (W) sur un déclenchement imminent d'une opération indépendante de freinage d'urgence d'un véhicule (110) pour éviter une collision avec un obstacle (120),

une commande (220) de module d'avertissement, qui est configurée pour permettre d'envoyer un avertissement produit à un conducteur du véhicule (110), si la durée à escompter jusqu'à la collision (ttc) est plus petite qu'une fonction (101, 102) de valeur limite, qui dépend d'une vitesse de l'obstacle (vH) et d'une vitesse relative du véhicule par rapport à l'obstacle (vR), et sinon pour supprimer une émission de l'avertissement (W) du conducteur,

**caractérisé en ce que**

la fonction (102) de valeur limite est une fonction d'un paramètre (P), dans lequel le paramètre (P) définit un rapport de la vitesse de l'obstacle (vH) à la vitesse (vR) relative par rapport à l'obstacle.

9. Produit de programme d'ordinateur ayant des instructions de programme, qui y sont mises en mémoire et qui sont constituées pour exécuter un procédé suivant l'une des revendications 1 à 7, lorsqu'il est exécuté par une unité de traitement.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- EP 1539523 B1

- DE 102009012226 A1